(19) **Europäisches Patentamt / European Patent Office / Office européen des brevets**

(11) **EP 4 632 864 A1**

(12) # EUROPEAN PATENT APPLICATION
published in accordance with Art. 153(4) EPC

(43) Date of publication:
**15.10.2025 Bulletin 2025/42**

(21) Application number: **23914776.2**

(22) Date of filing: **21.12.2023**

(51) International Patent Classification (IPC):
**H01M 10/0569** (2010.01)    **H01G 11/06** (2013.01)
**H01G 11/26** (2013.01)    **H01G 11/52** (2013.01)
**H01G 11/60** (2013.01)    **H01G 11/64** (2013.01)
**H01M 10/052** (2010.01)    **H01M 10/0567** (2010.01)

(52) Cooperative Patent Classification (CPC):
**H01G 11/06; H01G 11/26; H01G 11/52;
H01G 11/60; H01G 11/64; H01M 10/052;
H01M 10/0567; H01M 10/0569**

(86) International application number:
**PCT/JP2023/045854**

(87) International publication number:
**WO 2024/147290 (11.07.2024 Gazette 2024/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.01.2023 JP 2023000733**

(71) Applicant: **GS Yuasa International Ltd.
Kisshoin, Minami-ku,
Kyoto-shi, Kyoto 601-8520 (JP)**

(72) Inventors:
• **MATSUYOSHI, Tsubasa
  Kyoto-shi, Kyoto 601-8520 (JP)**
• **KAWASOE, Yudai
  Kyoto-shi, Kyoto 601-8520 (JP)**
• **MATSUMOTO, Mitsuhiro
  Kyoto-shi, Kyoto 601-8520 (JP)**

(74) Representative: **Isarpatent
Patent- und Rechtsanwälte
Barth Hassa Peckmann & Partner mbB
Friedrichstraße 31
80801 München (DE)**

(54) **NONAQUEOUS-ELECTROLYTE ELECTRICITY STORAGE ELEMENT**

(57)     A nonaqueous electrolyte energy storage device according to one aspect of the present invention includes a positive electrode, a negative electrode, a separator, and a nonaqueous electrolyte, in which the nonaqueous electrolyte contains a nonaqueous solvent containing a chain carboxylic acid ester and an additive configured to be decomposed by reduction on a surface of the negative electrode, and Formula 1 below is satisfied where a volume of the nonaqueous electrolyte is denoted by Ve, a void volume of the positive electrode is denoted by Vp, a void volume of the negative electrode is denoted by Vn, and a void volume of the separator is denoted by Vs.

$$(Vp + Vn + Vs) \times 1.1 \leq Ve \qquad\qquad 1$$

**EP 4 632 864 A1**

Fig. 1

**Description**

TECHNICAL FIELD

The present invention relates to a nonaqueous electrolyte energy storage device.

BACKGROUND ART

A nonaqueous electrolyte secondary battery typified by a lithium ion secondary battery is often used for electronic devices such as personal computers and communication terminals, motor vehicles, and the like, because the battery is high in energy density. The nonaqueous electrolyte secondary battery generally includes a pair of electrodes electrically separated from each other by a separator, and a nonaqueous electrolyte interposed between the electrodes, and is configured to allow charge transport ions to be transferred between the two electrodes for charge-discharge. Capacitors such as lithium ion capacitors and electric double layer capacitors are also widely used as nonaqueous electrolyte energy storage devices other than the nonaqueous electrolyte secondary batteries.

For improving the performance of the nonaqueous electrolyte energy storage devices, addition of various additives to the nonaqueous electrolytes has been studied (see Patent Document 1).

PRIOR ART DOCUMENT

PATENT DOCUMENT

Patent Document 1: JP-A-2004-319212

SUMMARY OF THE INVENTION

PROBLEMS TO BE SOLVED BY THE INVENTION

Some of the additives can increase the input of the nonaqueous electrolyte energy storage device when properly decomposed by reduction on the surface of the negative electrode. However, in the nonaqueous electrolyte energy storage device using such an additive, the additive may be excessively decomposed by reduction on the surface of the negative electrode, so that the initial input may be reduced. The input refers to energy (power: W) that can be taken in per unit time by the nonaqueous electrolyte energy storage device during charge. In other words, the input is input power during charge, and is an index indicating performance that enables efficient charge.

The present invention has been made in view of the foregoing circumstances, and an object of the present invention is to provide a nonaqueous electrolyte energy storage device having a large initial input.

MEANS FOR SOLVING THE PROBLEMS

A nonaqueous electrolyte energy storage device according to one aspect of the present invention includes a positive electrode, a negative electrode, a separator, and a nonaqueous electrolyte, in which the nonaqueous electrolyte contains a nonaqueous solvent containing a chain carboxylic acid ester and an additive configured to be decomposed by reduction on a surface of the negative electrode, and Formula 1 below is satisfied where a volume of the nonaqueous electrolyte is denoted by Ve, a void volume of the positive electrode is denoted by Vp, a void volume of the negative electrode is denoted by Vn, and a void volume of the separator is denoted by Vs.

$$(Vp + Vn + Vs) \times 1.1 \leq Ve \qquad\qquad 1$$

ADVANTAGES OF THE INVENTION

A nonaqueous electrolyte energy storage device according to an aspect of the present invention has a large initial input.

BRIEF DESCRIPTION OF THE DRAWINGS

Fig. 1 is a see-through perspective view illustrating an embodiment of a nonaqueous electrolyte energy storage device.
Fig. 2 is a schematic view illustrating an embodiment of an energy storage apparatus configured by assembling a plurality of nonaqueous electrolyte energy storage devices.

MODE FOR CARRYING OUT THE INVENTION

First, the outline of a nonaqueous electrolyte energy storage device disclosed in the present specification is described.

(1) A nonaqueous electrolyte energy storage device according to one aspect of the present invention includes a positive electrode, a negative electrode, a separator, and a nonaqueous electrolyte, in which the nonaqueous electrolyte contains a nonaqueous solvent containing a chain carboxylic acid ester and an additive configured to be decomposed by reduction on a surface of the negative electrode, and Formula 1 below is satisfied where a volume of the nonaqueous electrolyte is denoted by Ve, a void volume of the positive electrode is denoted by Vp, a void volume of the negative electrode is denoted by Vn, and a void volume of the separator is denoted by Vs.

$$(Vp + Vn + Vs) \times 1.1 \leq Ve \qquad\qquad 1$$

The nonaqueous electrolyte energy storage device according to (1) above has a large initial input. The reason therefor is not clear, but the following reason is presumed. In the nonaqueous electrolyte energy storage device according to (1) above, the nonaqueous electrolyte contains an additive that is decomposed by reduction on the surface of the negative electrode. According to findings by the present inventors, in such a conventional nonaqueous electrolyte energy storage device, the additive is excessively decomposed by reduction on the surface of the negative electrode at the time of initial charge, so that a thick film may be formed on the surface of the negative electrode. Such a thick film can be a factor in reducing the initial input of the nonaqueous electrolyte energy storage device. On the other hand, the nonaqueous electrolyte of the nonaqueous electrolyte energy storage device according to (1) above contains a chain carboxylic acid ester. This chain carboxylic acid ester is decomposed by reduction on the surface of the negative electrode in preference to the additive at the time of initial charge. As a result, excessive decomposition by reduction of the additive is suppressed, and thus a film derived from the additive is appropriately formed on the surface of the negative electrode. The nonaqueous electrolyte energy storage device according to (1) above thus has a large initial input.

In addition, in the case where the amount of the nonaqueous electrolyte in the nonaqueous electrolyte energy storage device is small, when the decomposition by reduction of the additive is suppressed by including the chain carboxylic acid ester as described above, the amount of the chain carboxylic acid ester and the amount of the additive in the nonaqueous electrolyte are small, so that a film derived from the chain carboxylic acid ester and the additive is not sufficiently formed on the surface of the negative electrode, other components (nonaqueous solvent or the like) in the nonaqueous electrolyte are decomposed by reduction on the surface of the negative electrode, and a film derived from the other components is easily formed. Such a film derived from the other components generally has high resistance, and may reduce an initial input of the nonaqueous electrolyte energy storage device. In this respect, in the nonaqueous electrolyte energy storage device according to (1) above, the amount of the nonaqueous electrolyte in the nonaqueous electrolyte energy storage device is kept large by satisfying Formula 1 above. As a result, the decomposition by reduction of the additive is not excessively suppressed, and the film derived from the other components in the nonaqueous electrolyte is hardly formed. The nonaqueous electrolyte energy storage device according to (1) above thus has a large initial input.

With the nonaqueous electrolyte energy storage device described in (1) above, since the excessive decomposition by reduction of the additive is suppressed by including the chain carboxylic acid ester as described above, a sufficient amount of the additive may remain in the nonaqueous electrolyte even after the initial charge-discharge. The additive remaining as described above is gradually decomposed by reduction so as to maintain the film during a charge-discharge cycle. The nonaqueous electrolyte energy storage device according to (1) above may thus have a large input after a charge-discharge cycle.

(2) In the nonaqueous electrolyte energy storage device according to (1) above, a reduction potential of the additive may be 0.5 V (vs. Li/Li$^+$) or more.

In the nonaqueous electrolyte energy storage device according to (2) above, since the additive is more easily decomposed by reduction on the surface of the negative electrode, the effect of the present invention can be remarkably exhibited.

(3) In the nonaqueous electrolyte energy storage device according to (1) or (2) above, the additive may be at least one selected from the group consisting of unsaturated cyclic carbonates, fluorinated cyclic carbonates, oxalate salts containing the phosphorus element or the boron element, sulfonate salts containing the fluorine element, phosphate salts containing the fluorine element and the oxygen element, sulfates, and sulfonic acid esters.

The initial input of the nonaqueous electrolyte energy storage device according to (3) above can be easily increased.

(4) In the nonaqueous electrolyte energy storage device according to any one of (1) to (3) above, the additive may be at least one of an unsaturated cyclic carbonate and an oxalate salt containing the phosphorus element or the boron element.

The initial input of the nonaqueous electrolyte energy storage device according to (4) above can be further increased.

(5) In the nonaqueous electrolyte energy storage device according to (4) above, a ratio (C/(A + B)) of a content C of the chain carboxylic acid ester to a total amount of a content A of the unsaturated cyclic carbonate and a content B of the oxalate salt containing the phosphorus element or the boron element in the nonaqueous electrolyte may be 6.4 or more and 14.4 or less on a molar basis.

In the nonaqueous electrolyte energy storage device according to (5) above, also during a charge-discharge cycle, the unsaturated cyclic carbonate, the oxalate salt containing the phosphorus element or the boron element, and the chain carboxylic acid ester are decomposed by reduction in a well-balanced manner, and the film is maintained at an appropriate thickness on the surface of the negative electrode, so that an increase in resistance during the charge-discharge cycle is suppressed. The nonaqueous electrolyte energy storage device according to (5) above thus has a large input retention ratio after a charge-discharge cycle.

(6) In the nonaqueous electrolyte energy storage device according to (4) above, a ratio (C/(A + B)) of a content C of the chain carboxylic acid ester to a total amount of a content A of the unsaturated cyclic carbonate and a content B of the oxalate salt containing the phosphorus element or the boron element in the nonaqueous electrolyte may be 9.7 or more on a molar basis.

In the nonaqueous electrolyte energy storage device according to (6) above, also during a charge-discharge cycle, the unsaturated cyclic carbonate, the oxalate salt containing the phosphorus element or the boron element, and the chain carboxylic acid ester are decomposed by reduction in a well-balanced manner, and the film is maintained at an appropriate thickness on the surface of the negative electrode, so that an increase in resistance during the charge-discharge cycle is suppressed. The nonaqueous electrolyte energy storage device according to (5) above thus has a large input after a charge-discharge cycle.

In the present invention, the "additive" means a compound whose content in the nonaqueous electrolyte before initial charge-discharge is 10% by mass or less per one kind of compound except for the chain carboxylic acid ester.

In the present invention, the "volume of the nonaqueous electrolyte" is the volume [cm$^3$] of the nonaqueous electrolyte measured at 25°C and 1 atm. When a nonaqueous electrolyte solution is used as the nonaqueous electrolyte, the volume of the nonaqueous electrolyte is measured by the following method.

First, the mass $W_1$ of the nonaqueous electrolyte energy storage device (nonaqueous electrolyte solution energy storage device) is measured. The nonaqueous electrolyte energy storage device is disassembled, the nonaqueous electrolyte solution that can be extracted is taken out, and then all the constituent members are washed with dimethyl carbonate (DMC) and dried under reduced pressure at room temperature for 24 hours. The expression "all the constituent members" refers to all members other than the nonaqueous electrolyte solution constituting the nonaqueous electrolyte energy storage device. Next, the mass $W_2$ of all the constituent members after drying is measured. The mass $W_3$ of the nonaqueous electrolyte solution is determined from the difference ($W_1$ - $W_2$) between the mass $W_1$ of the nonaqueous electrolyte energy storage device and the mass $W_2$ of all the constituent members after drying. Then, the volume of the nonaqueous electrolyte solution is calculated from the mass $W_3$ of the nonaqueous electrolyte solution and the density of the nonaqueous electrolyte solution. The density of the nonaqueous electrolyte solution is a value at 25°C and is determined by measuring the nonaqueous electrolyte solution taken out when the nonaqueous electrolyte energy storage device is disassembled using a liquid densitometer.

In the present invention, the "void volume" is measured by the following method.

The nonaqueous electrolyte energy storage device is subjected to constant current discharge with a current of 0.1 C until the voltage becomes an end-of-discharge voltage at the time of normal use, so that the energy storage device is brought to a discharged state. Here, the term "normal use" means use of the nonaqueous electrolyte energy storage device under the charge-discharge conditions recommended or specified for the nonaqueous electrolyte energy storage device. The nonaqueous electrolyte energy storage device in the discharged state is disassembled, the positive electrode, the negative electrode, and the separator to be measured are taken out, each washed with dimethyl carbonate (DMC), and then dried under reduced pressure at room temperature for 24 hours.

The void volume of the positive electrode can be determined as the difference between the apparent volume of the positive electrode and the sum of the actual volumes of the respective materials forming the positive electrode. For example, when the positive electrode includes a positive electrode substrate that is not porous, or that has no voids, and a positive active material layer that is porous, or that has voids, the void volume of the positive electrode is equal to the void volume of the positive active material layer. The void volume of the positive active material layer is determined from the

difference ($V_1$ - $V_2$) between the apparent volume (volume including voids) $V_1$ of the positive active material layer and the sum $V_2$ of actual volumes of materials forming the positive active material layer. The apparent volume of the positive active material layer can be calculated from the length, average thickness, and width of the positive active material layer. The average thickness is the average of measured values at any five positions (hereinafter the same applies to the average thickness). The sum $V_2$ of actual volumes of the materials forming the positive active material layer can be calculated from the content of each material in the positive active material layer and the true density of each material.

The void volume of the negative electrode can be determined as the difference between the apparent volume of the negative electrode and the sum of the actual volumes of the respective materials forming the negative electrode. When the negative electrode includes a negative electrode substrate having no voids and a negative active material layer having voids, the void volume of the negative electrode is equal to the void volume of the negative active material layer. The void volume of the negative active material layer can be determined similarly to the void volume of the positive active material layer.

The void volume of the separator is determined from the difference between the apparent volume and the actual volume of the separator. The apparent volume of the separator can be calculated from the length, average thickness, and width of the separator. The actual volume of the separator can be calculated from the mass and the true density of the separator. When the separator is constructed of a plurality of members (layers), the void volume of the separator can be determined as the sum of the void volumes of the respective members forming the separator. For example, when the separator includes a porous substrate layer and a porous heat resistant layer described later, the void volume of the separator can be determined as the sum of the void volume of the substrate layer and the void volume of the heat resistant layer.

In the present invention, the "reduction potential" means a potential (vs. Li/Li$^+$) of a reduction peak (reduction peak at the noblest potential observed in the first cycle) confirmed from a measurement result by the cyclic voltammetry (CV) method. The CV method is performed under the following measurement conditions.

[Measurement conditions]

    Working electrode: Graphite
    Reference electrode: Metal Li
    Solvent composition: EC : EMC = 3 : 7 (volume ratio)
    Electrolyte salt: $LiPF_6$ (1 mol/dm$^3$)
    Temperature: Room temperature
    Scanning speed: 1 mV/s
    Number of scans: 2 cycles
    Scanning zone: 0 V (vs. Li/Li$^+$) - 3.2 V (vs. Li/Li$^+$)

In the present invention, the content A of the unsaturated cyclic carbonate, the content B of the oxalate salt containing the phosphorus element or the boron element, and the content C of the chain carboxylic acid ester in the nonaqueous electrolyte are the contents in the nonaqueous electrolyte solution taken out when the nonaqueous electrolyte energy storage device is disassembled. The content A of the unsaturated cyclic carbonate and the content C of the chain carboxylic acid ester in the nonaqueous electrolyte are determined using gas chromatography-mass spectrometry (GC-MS). In addition, the content B of the oxalate salt containing the phosphorus element or the boron element is determined using ion chromatography (IC).

Hereinafter, a nonaqueous electrolyte energy storage device, an energy storage apparatus, and a method for producing a nonaqueous electrolyte energy storage device according to an embodiment and other embodiments of the present invention will be described in detail. It is to be noted that the names of the constituent members (constituent elements) described in the embodiments are in some cases different from the names of the constituent members (constituent elements) described in

BACKGROUND ART.

[Nonaqueous electrolyte energy storage device]

A nonaqueous electrolyte energy storage device according to an embodiment of the present invention (hereinafter also referred to simply as an "energy storage device") includes: an electrode assembly including a positive electrode, a negative electrode, and a separator; a nonaqueous electrolyte; and a case that houses the electrode assembly and the nonaqueous electrolyte. The electrode assembly is typically a stacked type in which a plurality of positive electrodes and a plurality of negative electrodes are stacked with a separator interposed therebetween, or a wound type in which a positive electrode and a negative electrode are wound in a state of being stacked with a separator interposed therebetween. The nonaqueous electrolyte is present in a state of being contained in the positive electrode, the negative electrode, and the separator. A nonaqueous electrolyte secondary battery (hereinafter also referred to simply as a "secondary battery") is described as an example of the nonaqueous electrolyte energy storage device.

<Positive electrode>

The positive electrode includes a positive electrode substrate and a positive active material layer disposed on the positive electrode substrate directly or with an intermediate layer interposed therebetween.

The positive electrode substrate has conductivity. It is determined whether or not the positive substrate has "conductivity" by using a volume resistivity of $10^{-2}$ $\Omega \cdot$cm as a threshold, the volume resistivity being measured in accordance with JIS-H-0505 (1975). As a material for the positive electrode substrate, a metal such as aluminum, titanium, tantalum, and stainless steel, or an alloy thereof is used. Among these materials, aluminum or an aluminum alloy is preferable from the viewpoints of electric potential resistance, high conductivity, and costs. Examples of the positive electrode substrate include a foil, a deposited film, a mesh, and a porous material. A foil is preferable from the viewpoint of costs. Accordingly, the positive electrode substrate is preferably an aluminum foil or an aluminum alloy foil. Examples of the aluminum or aluminum alloy include A1085, A3003, A1N30, and the like specified in JIS-H-4000 (2014) or JIS-H-4160 (2006).

The average thickness of the positive electrode substrate is preferably 3 $\mu$m or more and 50 $\mu$m or less, more preferably 5 $\mu$m or more and 40 $\mu$m or less, still more preferably 8 $\mu$m or more and 30 $\mu$m or less, particularly preferably 10 $\mu$m or more and 25 $\mu$m or less. The average thickness of the positive electrode substrate falls within the range mentioned above, thereby allowing the energy density per volume of the nonaqueous electrolyte energy storage device to be increased while increasing the strength of the positive electrode substrate.

The intermediate layer is a layer arranged between the positive electrode substrate and the positive active material layer. The intermediate layer contains a conductive agent such as carbon particles, and thereby reduces contact resistance between the positive electrode substrate and the positive active material layer. The configuration of the intermediate layer is not particularly limited, and includes, for example, a binder and a conductive agent.

The positive active material layer includes a positive active material. The positive active material layer contains optional components such as a conductive agent, a binder, a thickener, and a filler, if necessary.

The positive active material can be appropriately selected from known positive active materials. As the positive active material for a lithium ion secondary battery, a material capable of occluding and releasing lithium ions is typically used. Examples of the positive active material include lithium transition metal composite oxides that have an $\alpha$-NaFeO$_2$-type crystal structure, lithium transition metal composite oxides that have a spinel-type crystal structure, polyanion compounds, chalcogenides, and sulfur. Examples of the lithium transition metal composite oxides that have an $\alpha$-NaFeO$_2$-type crystal structure include Li[Li$_x$Ni$_{(1-x)}$]O$_2$ (0 ≤ x < 0.5), Li[Li$_x$Ni$_y$Co$_{(1-x-\gamma)}$]O$_2$ (0 ≤ x < 0.5, 0 < y < 1, 0 < 1 - x - y), Li[Li$_x$Co$_{(1-x)}$]O$_2$ (0 ≤ x < 0.5), Li[Li$_x$Ni$_y$Mn$_{(1-x-\gamma)}$]O$_2$ (0 ≤ x < 0.5, 0 < $\gamma$ < 1, 0 < 1 - x - y), Li[Li$_x$Ni$_y$Mn$_\beta$Co$_{(1-x-\gamma-\beta)}$]O$_2$ (0 ≤ x < 0.5, 0 < y, 0 < B, 0.5 < $\gamma + \beta$ < 1, 0 < 1 - x - $\gamma$ - $\beta$), and Li[Li$_x$Ni$_y$Co$_\beta$Al$_{(1-x-\gamma-\beta)}$]O$_2$ (0 ≤ x < 0.5, 0 < y, 0 < B, 0.5 < $\gamma + \beta$ < 1, 0 < 1 - x - $\gamma$ - $\beta$). Examples of the lithium transition metal composite oxides having a spinel-type crystal structure include Li$_x$Mn$_2$O$_4$ and Li$_x$Ni$_y$Mn$_{(2-\gamma)}$O$_4$. Examples of the polyanion compounds include LiFePO$_4$, LiMnPO$_4$, LiNiPO$_4$, LiCoPO$_4$, Li$_3$V$_2$(PO$_4$)$_3$, Li$_2$MnSiO$_4$, and Li$_2$CoPO$_4$F. Examples of the chalcogenides include titanium disulfide, molybdenum disulfide, and molybdenum dioxide. Some of atoms or polyanions in these materials may be replaced with atoms or anion species composed of other elements. These materials may have surfaces coated with other materials. In the positive active material layer, one of these materials may be used singly, or two or more thereof may be used in mixture.

The positive active material is preferably a lithium transition metal composite oxide, more preferably a lithium transition metal composite oxide containing at least one of the nickel element, the cobalt element, and the manganese element, still more preferably a lithium transition metal composite oxide containing at least two of the nickel element, the cobalt element, and the manganese element, even more preferably a lithium transition metal composite oxide containing the nickel element, the cobalt element, and the manganese element. The lithium transition metal composite oxide preferably has an $\alpha$-NaFeO$_2$-type crystal structure. By using such a lithium transition metal composite oxide, for example, the energy density can be increased.

The positive active material is typically particles (powder). The average particle size of the positive active material is, for example, preferably 0.1 $\mu$m or more and 20 $\mu$m or less. By setting the average particle size of the positive active material to be greater than or equal to the above lower limit, the positive active material is easily produced or handled. By setting the average particle size of the positive active material to lower than or equal to the above upper limit, the electron conductivity of the positive active material layer is improved. In the case of using a composite of the positive active material and another material, the average particle size of the composite is regarded as the average particle size of the positive active material. The "average particle size" means a value corresponding to 50% in a volume-based cumulative distribution calculated, in accordance with JIS-Z-8819-2 (2001), on the basis of a particle size distribution obtained by measuring a diluted solution, which is obtained by diluting particles with a solvent, by a laser diffraction/scattering method in accordance with JIS-Z-8825 (2013).

In order to obtain a powder with a prescribed particle size, a crusher, a classifier, or the like is used. Examples of a crushing method include a method using a mortar, a ball mill, a sand mill, a vibratory ball mill, a planetary ball mill, a jet mill, a counter jet mill, a whirling airflow-type jet mill, a sieve, or the like. Wet crushing in which crushing is performed in the presence of water or an organic solvent such as hexane can also be used. As a classification method, a sieve, a wind force classifier, or the like is used based on the necessity both in dry manner and in wet manner.

The content of the positive active material in the positive active material layer is preferably 50% by mass or more and 99% by mass or less, more preferably 70% by mass or more and 98% by mass or less, still more preferably 80% by mass or more and 95% by mass or less. When the content of the positive active material falls within the above range, a balance can be achieved between the increased energy density and manufacturability of the positive active material layer.

The conductive agent is not particularly limited as long as it is a material exhibiting conductivity. Examples of such a conductive agent include a carbonaceous material, a metal, and conductive ceramics. Examples of the carbonaceous material include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and a fullerene. Examples of the shape of the conductive agent include a powdery shape and a fibrous shape. As the conductive agent, one of these materials may be used singly, or two or more thereof may be used in mixture. Alternatively, these materials may be used in the form of a composite. For example, a composite material of carbon black and CNTs may be used. Among these materials, carbon black is preferable from the viewpoint of electron conductivity and coatability, and in particular, acetylene black is preferable.

The content of the conductive agent in the positive active material layer is preferably 1% by mass or more and 10% by mass or less, more preferably 3% by mass or more and 9% by mass or less. When the content of the conductive agent falls within the range mentioned above, the energy density of the nonaqueous electrolyte energy storage device can be enhanced.

Examples of the binder include thermoplastic resins such as fluororesins (such as polytetrafluoroethylene (PTFE) and polyvinylidene fluoride (PVDF)), polyethylene, polypropylene, polyacryl, and polyimide; elastomers such as an ethylene-propylene-diene rubber (EPDM), sulfonated EPDM, a styrene butadiene rubber (SBR), and a fluororubber; and polysaccharide polymers.

The content of the binder in the positive active material layer is preferably 1% by mass or more and 10% by mass or less, more preferably 3% by mass or more and 9% by mass or less. When the content of the binder falls within the above range, the positive active material can be stably held.

Examples of the thickener include polysaccharide polymers such as carboxymethylcellulose (CMC) and methylcellulose. When the thickener has a functional group that is reactive with lithium and the like, the functional group may be deactivated by methylation or the like in advance. In the case of using a thickener, the content of the thickener in the positive active material layer can be 0.1% by mass or more and 8% by mass or less, and is typically preferably 5% by mass or less, more preferably 2% by mass or less. The technique disclosed herein can be preferably carried out in an aspect in which the positive active material layer contains no thickener.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide, and aluminosilicate salts, hydroxides such as magnesium hydroxide, calcium hydroxide, and aluminum hydroxide, carbonate salts such as calcium carbonate, hardly soluble ionic crystals such as calcium fluoride, barium fluoride, and barium sulfate, nitrides such as aluminum nitride and silicon nitride, substances derived from mineral resources, such as talc, montmorillonite, boehmite, zeolite, apatite, kaolin, mullite, spinel, olivine, sericite, bentonite, and mica, and artificial products thereof. In the case of using a filler, the content of the filler in the positive active material layer can be 0.1% by mass or more and 8% by mass or less, and is typically preferably 5% by mass or less, more preferably 2% by mass or less. The technique disclosed herein can be preferably carried out in an aspect in which the positive active material layer contains no filler.

The positive active material layer may contain typical nonmetallic elements such as B, N, P, F, Cl, Br, and I, typical metallic elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Nb, and W as a component other than the positive active material, the conductive agent, the binder, the thickener, and the filler.

<Negative electrode>

The negative electrode includes a negative electrode substrate and a negative active material layer disposed directly on the negative electrode substrate or over the negative electrode substrate with an intermediate layer interposed therebetween. The configuration of the intermediate layer is not particularly limited, and for example, can be selected from the configurations exemplified for the positive electrode.

The negative electrode substrate has conductivity. As a material of the negative electrode substrate, a metal such as copper, nickel, stainless steel, nickel-plated steel, and aluminum, or an alloy thereof, a carbonaceous material, or the like is used. Among these materials, copper or a copper alloy is preferable. Examples of the negative electrode substrate include a foil, a deposited film, a mesh, and a porous material, and a foil is preferable from the viewpoint of cost. Accordingly, the negative electrode substrate is preferably a copper foil or a copper alloy foil. Examples of the copper foil include a rolled copper foil and an electrolytic copper foil.

The average thickness of the negative electrode substrate is preferably 2 μm or more and 35 μm or less, more preferably 3 μm or more and 30 μm or less, still more preferably 4 μm or more and 25 μm or less, particularly preferably 5 μm or more and 20 μm or less. By setting the average thickness of the negative electrode substrate within the range mentioned above, it is possible to enhance the energy density per volume of the nonaqueous electrolyte energy storage device while increasing the strength of the negative electrode substrate.

The negative active material layer includes a negative active material. The negative active material layer contains optional components such as a conductive agent, a binder, a thickener, and a filler, if necessary. The optional components such as a conductive agent, a binder, a thickener, and a filler can be selected from the materials exemplified for the positive electrode.

The negative active material layer may contain typical nonmetallic elements such as B, N, P, F, Cl, Br, and I, typical metallic elements such as Li, Na, Mg, Al, K, Ca, Zn, Ga, Ge, Sn, Sr, and Ba, or transition metal elements such as Sc, Ti, V, Cr, Mn, Fe, Co, Ni, Cu, Mo, Zr, Ta, Hf, Nb, and W as a component other than the negative active material, the conductive agent, the binder, the thickener, and the filler.

The negative active material can be appropriately selected from known negative active materials. As a negative active material for a lithium ion secondary battery, a material capable of occluding and releasing lithium ions is typically used. Examples of the negative active material include metal Li; metals or metalloids such as Si and Sn; metal oxides or metalloid oxides such as Si oxide, Ti oxide, and Sn oxide; titanium-containing oxides such as $Li_4Ti_5O_{12}$, $LiTiO_2$, and $TiNb_2O_7$; polyphosphoric acid compounds; silicon carbide; and carbon materials such as graphite and non-graphitic carbon (graphitizable carbon or non-graphitizable carbon). Among these materials, graphite and non-graphitic carbon are preferable. In the negative active material layer, one of these materials may be used singly, or two or more thereof may be used in mixture.

The term "graphite" refers to a carbon material in which the average lattice spacing ($d_{002}$) of the (002) plane determined by the X-ray diffraction method before charge-discharge or in the discharged state is 0.33 nm or more and less than 0.34 nm. Examples of the graphite include natural graphite and artificial graphite. Artificial graphite is preferable from the viewpoint that a material having stable physical properties is available.

The term "non-graphitic carbon" refers to a carbon material in which the average lattice spacing ($d_{002}$) of the (002) plane determined by the X-ray diffraction method before charge-discharge or in the discharged state is 0.34 nm or more and 0.42 nm or less. Examples of the non-graphitic carbon include non-graphitizable carbon and graphitizable carbon. Examples of the non-graphitic carbon include a resin-derived material, a petroleum pitch or a material derived from petroleum pitch, a petroleum coke or a material derived from petroleum coke, a plant-derived material, and an alcoholderived material.

In this regard, the "discharged state" of the carbon material means a state where the discharge has been performed such that lithium ions that can be occluded and released in association with charge-discharge are sufficiently released from the carbon material that is the negative active material. For example, the "discharged state" of a half cell that includes, as a working electrode, a negative electrode containing a carbon material as the negative active material and includes metal Li as a counter electrode is a state where the cell has an open circuit voltage of 0.7 V or higher.

The "non-graphitizable carbon" refers to a carbon material in which the $d_{002}$ is 0.36 nm or more and 0.42 nm or less.

The "graphitizable carbon" refers to a carbon material in which the $d_{002}$ is 0.34 nm or more and less than 0.36 nm.

The negative active material is typically particles (powder). The average particle size of the negative active material can be set to, for example, 1 nm or more and 100 μm or less. When the negative active material is a carbon material, a titanium-containing oxide, or a polyphosphoric acid compound, the average particle size thereof may be 1 μm or more and 100 μm or less. When the negative active material is Si, Sn, Si oxide, Sn oxide, or the like, the average particle size thereof may be 1 nm or more and 1 μm or less. Setting the average particle size of the negative active material to the above lower limit or more facilitates manufacturing and handling of the negative active material. By setting the average particle size of the negative active material to be equal to or less than the above upper limit, the electron conductivity of the negative active material layer is improved. In order to obtain a powder with a prescribed particle size, a crusher, a classifier, or the like is used. The crushing method and classification method can be selected from, for example, the methods exemplified for the positive electrode. When the negative active material is a metal such as metal Li, the negative active material layer may have the form of a foil.

The content of the negative active material in the negative active material layer is preferably 60% by mass or more and 99% by mass or less, more preferably 90% by mass or more and 98% by mass or less. When the content of the negative active material falls within the above range, it is possible to achieve both high energy density and manufacturability of the negative active material layer. When the negative active material is metal Li, the content of the negative active material in the negative active material layer may be 99% by mass or more, and may be 100% by mass.

<Separator>

The separator can be appropriately selected from known separators. As the separator, for example, a separator composed only of a substrate layer, a separator where a heat resistant layer containing heat resistant particles and a binder is formed on one surface or both the surfaces of the substrate layer, or the like can be used. Examples of the form of the substrate layer of the separator include a woven fabric, a nonwoven fabric, and a porous resin film. Among these forms, the porous resin film is preferable from the viewpoint of strength, and the nonwoven fabric is preferable from the viewpoint of the liquid retaining property of the nonaqueous electrolyte. As the material for the substrate layer of the separator, for example, a polyolefin such as polyethylene and polypropylene is preferable from the viewpoint of shutdown function, and polyimide, aramid, or the like is preferable from the viewpoint of resistance to oxidative decomposition. As the substrate layer of the separator, a material obtained by combining these resins may be used.

The heat resistant particles included in the heat resistant layer preferably have a mass loss of 5% or less in the case of temperature increase from room temperature to 500°C under the air atmosphere of 1 atm, and more preferably have a mass loss of 5% or less in the case of temperature increase from room temperature to 800°C. Examples of a material having the prescribed mass loss or less include an inorganic compound. Examples of the inorganic compound include: oxides such as iron oxide, silicon oxide, aluminum oxide, titanium oxide, zirconium oxide, calcium oxide, strontium oxide, barium oxide, magnesium oxide, and aluminosilicate salts; nitrides such as aluminum nitride and silicon nitride; carbonate salts such as calcium carbonate; sulfate salts such as barium sulfate; hardly soluble ionic crystals such as calcium fluoride, barium fluoride, and barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, or artificial products thereof. As the inorganic compound, simple substances or composites of these substances may be used singly, or two or more thereof may be used in mixture. Among these inorganic compounds, silicon oxide, aluminum oxide, or an aluminosilicate salt is preferable from the viewpoint of the safety of the nonaqueous electrolyte energy storage device.

The porosity of the separator is preferably 80% by volume or less from the viewpoint of strength, and is preferably 20% by volume or more from the viewpoint of discharge performance. The term "porosity" herein is a volume-based value, and means a value measured with a mercury porosimeter.

As the separator, a polymer gel composed of a polymer and a nonaqueous electrolyte may be used. Examples of the polymer include polyacrylonitrile, polyethylene oxide, polypropylene oxide, polymethyl methacrylate, polyvinyl acetate, polyvinylpyrrolidone, and polyvinylidene fluoride. The use of the polymer gel has the effect of suppressing liquid leakage. As the separator, the polymer gel may be used in combination with a porous resin film, a nonwoven fabric, or the like as described above.

<Nonaqueous electrolyte>

The nonaqueous electrolyte in one embodiment of the present invention contains a nonaqueous solvent containing a chain carboxylic acid ester and an additive that is decomposed by reduction on the surface of the negative electrode. The nonaqueous electrolyte is typically a nonaqueous electrolyte solution including the nonaqueous solvent, the electrolyte salt dissolved in the nonaqueous solvent, and the additive.

The chain carboxylic acid ester contained in the nonaqueous solvent may be a compound represented by the chemical formula $[R^1(COO)R^2]$. In the above chemical formula, $R^1$ and $R^2$ are saturated or unsaturated hydrocarbon groups each having 1 to 5 (preferably 1 to 3, more preferably 1 or 2) carbon atoms. $R^1$ may be the same as or different from $R^2$. $R^1$ and $R^2$ may be linear or branched. The hydrogen atoms in $R^1$ and $R^2$ may be partially substituted with halogen (such as a fluorine (F) atom, a chlorine (Cl) atom, and a bromine (Br) atom) or the like.

Examples of the chain carboxylic acid ester include methyl propionate, ethyl propionate, propyl propionate, methyl acetate, ethyl acetate, propyl acetate, methyl butyrate, ethyl butyrate, propyl butyrate, methyl acrylate, and methyl methacrylate. Among them, a propionic acid ester that is easily decomposed by reduction on the surface of the negative electrode is preferable, and methyl propionate is more preferable. One of the chain carboxylic acid esters may be used singly, or two or more thereof may be used in mixture.

The lower limit of the content of the chain carboxylic acid ester in the nonaqueous electrolyte solution before the initial charge-discharge is preferably 1% by volume, more preferably 1.5% by volume, still more preferably 2% by volume with respect to the whole nonaqueous solvent. From the viewpoint of improving the input after the charge-discharge cycle, the lower limit of the content of the chain carboxylic acid ester is more preferably 3% by volume, particularly preferably 5% by volume in some cases. In several aspects, the content of the chain carboxylic acid ester may be more than 5% by volume, or 5.5% by volume or more. On the other hand, the upper limit of the content of the chain carboxylic acid ester is preferably 9% by mass, more preferably 8% by volume, still more preferably 7% by volume. From the viewpoint of enhancing the input retention ratio after the charge-discharge cycle, the upper limit of the content of the chain carboxylic acid ester is still more preferably 6% by volume in some cases. In several aspects, the content of the chain carboxylic acid ester may be 5% by volume or less (such as less than 5% by volume and 4.5% by volume or less). When the content of the chain carboxylic acid ester is the above lower limit or more, the input of the nonaqueous electrolyte energy storage device can be easily increased. When the content of the chain carboxylic acid ester is the above upper limit or less, the efficiency of the effect of increasing the initial input with respect to the content of the chain carboxylic acid ester is high. The content of the chain carboxylic acid ester is preferably 1% by volume or more and 9% by volume or less, preferably 1.5% by volume or more and 8% by volume or less, still more preferably 2% by volume or more and 7% by volume or less.

The lower limit of the content C (remaining amount) of the chain carboxylic acid ester in the nonaqueous electrolyte solution after the initial charge-discharge is preferably 5.0 mol/dm$^3$, more preferably 10.0 mol/dm$^3$, still more preferably 15.0 mol/dm$^3$, still more preferably 17.0 mol/dm$^3$. The lower limit of the content C of the chain carboxylic acid ester is particularly preferably 20.0 mol/dm$^3$, particularly preferably 25.0 mol/dm$^3$ in some cases. On the other hand, the upper limit of the content C of the chain carboxylic acid ester is preferably 100.0 mol/dm$^3$, more preferably 80.0 mol/dm$^3$, still more preferably 60.0 mol/dm$^3$, still more preferably 45.0 mol/dm$^3$. Furthermore, from the viewpoint of increasing the input after the charge-discharge cycle, the upper limit of the content C of the chain carboxylic acid ester is particularly preferably 40.0 mol/dm$^3$ in some cases. In several aspects, the content C of the chain carboxylic acid ester may be 30.0 mol/dm$^3$ or less, or 25.0 mol/dm$^3$ or less. The content C of the chain carboxylic acid ester after the initial charge-discharge may be equal to or more than any of the above lower limits and equal to or less than any of the above upper limits. When the content C of the chain carboxylic acid ester after the initial charge-discharge is within the above range, the input after the charge-discharge cycle can be increased.

The nonaqueous solvent other than the chain carboxylic acid ester can be appropriately selected from known nonaqueous solvents. Examples of the other nonaqueous solvent include cyclic carbonates, chain carbonates, cyclic carboxylic acid esters, phosphoric acid esters, ethers, amides, and nitriles. As the nonaqueous solvent, those in which some of the hydrogen atoms included in these compounds are substituted with halogen may be used.

Examples of the cyclic carbonate include ethylene carbonate (EC), propylene carbonate (PC), butylene carbonate (BC), chloroethylene carbonate, and styrene carbonate. Among these carbonates, EC is preferable.

Examples of the chain carbonates include diethyl carbonate (DEC), dimethyl carbonate (DMC), ethyl methyl carbonate (EMC), diphenyl carbonate, trifluoroethyl methyl carbonate, and bis(trifluoroethyl) carbonate. Among these, EMC and DMC are preferable.

As the nonaqueous solvent other than the chain carboxylic acid ester, it is preferable to use the cyclic carbonate or the chain carbonate, and it is more preferable to use the cyclic carbonate and the chain carbonate in combination. The use of the cyclic carbonate allows the promoted dissociation of the electrolyte salt to improve the ionic conductivity of the nonaqueous electrolyte solution. The use of the chain carbonate allows the viscosity of the nonaqueous electrolyte solution to be kept low. When the cyclic carbonate and the chain carbonate are used in combination, a volume ratio of the cyclic carbonate to the chain carbonate (cyclic carbonate : chain carbonate) is preferably in a range from 5 : 95 to 50 : 50, for example.

The electrolyte salt can be appropriately selected from known electrolyte salts. Examples of the electrolyte salt include lithium salts, sodium salts, potassium salts, magnesium salts, and onium salts. Among these salts, the lithium salt is preferable.

Examples of the lithium salt include inorganic lithium salts such as $LiPF_6$, $LiPO_2F_2$, $LiBF_4$, $LiClO_4$, and $LiN(SO_2F)_2$, and lithium salts having a halogenated hydrocarbon group, such as $LiN(SO_2CF_3)_2$, $LiN(SO_2C_2F_5)_2$, $LiN(SO_2CF_3)(SO_2C_4F_9)$, $LiC(SO_2CF_3)_3$, and $LiC(SO_2C_2F_5)_3$. Among these salts, inorganic lithium salts are preferable, and $LiPF_6$ is more preferable.

The content of the electrolyte salt in the nonaqueous electrolyte solution is, at 25°C under 1 atm, preferably 0.1 mol/dm$^3$ or more and 2.5 mol/dm$^3$ or less, more preferably 0.3 mol/dm$^3$ or more and 2.0 mol/dm$^3$ or less, still more preferably 0.5 mol/dm$^3$ or more and 1.7 mol/dm$^3$ or less, particularly preferably 0.7 mol/dm$^3$ or more and 1.5 mol/dm$^3$ or less. When the content of the electrolyte salt falls within the above range, the ionic conductivity of the nonaqueous electrolyte solution can be increased.

The nonaqueous electrolyte solution contains the additive that is decomposed by reduction on the surface of the negative electrode as described above. The lower limit of the reduction potential of such an additive is preferably 0.5 V (vs. Li/Li$^+$), preferably 0.7 V (vs. Li/Li$^+$), more preferably 0.9 V (vs. Li/Li$^+$). On the other hand, the upper limit of the reduction potential of such an additive is preferably 2.0 V (vs. Li/Li$^+$), more preferably 1.8 V (vs. Li/Li$^+$), still more preferably 1.6 V (vs. Li/Li$^+$). When the reduction potential of the additive is the lower limit or more, a film is easily formed on the surface of the negative electrode, so that the effect of the present invention is easily remarkably exhibited. When the reduction potential of the additive is the above upper limit or less, it is possible to suppress a decrease in input due to formation of an excessively thick film on the surface of the negative electrode. The reduction potential of the additive is preferably 0.5 V (vs. Li/Li$^+$) or more and 2.0 V (vs. Li/Li$^+$) or less, more preferably 0.7 V (vs. Li/Li$^+$) or more and 1.8 V (vs. Li/Li$^+$) or less, still more preferably 0.9 V (vs. Li/Li$^+$) or more and 1.6 V (vs. Li/Li$^+$) or less.

Examples of the additive that is decomposed by reduction on the surface of the negative electrode include unsaturated cyclic carbonates, fluorinated cyclic carbonates, oxalate salts containing the phosphorus element or the boron element, sulfonate salts containing the fluorine element, phosphate salts containing the fluorine element and the oxygen element, sulfates, and sulfonic acid esters from the viewpoint of exhibiting the above-described reduction potential and easily forming a good film on the surface of the negative electrode. One of these additives may be used singly, or two or more thereof may be used in mixture.

Examples of the unsaturated cyclic carbonate include vinylene carbonate (VC), vinylethylene carbonate (VEC), 1-methylvinylene carbonate, 1-ethylvinylene carbonate, 1-phenylvinylene carbonate, and 1,2-diphenylvinylene carbonate. As the unsaturated cyclic carbonate, a cyclic carbonate having a carbon-carbon unsaturated bond in the cyclic structure is preferable, and vinylene carbonate is more preferable.

When the nonaqueous electrolyte solution contains an unsaturated cyclic carbonate, the lower limit of the content of the unsaturated cyclic carbonate in the nonaqueous electrolyte solution before the initial charge-discharge is preferably 0.01% by mass, more preferably 0.05% by mass, still more preferably 0.10% by mass, still more preferably 0.15% by mass with respect to the total mass of the nonaqueous electrolyte solution. On the other hand, the upper limit of the content of the unsaturated cyclic carbonate is preferably 3.0% by mass, more preferably 2.0% by mass, still more preferably 1.0% by mass, still more preferably 0.8% by mass. The upper limit of the content of the unsaturated cyclic carbonate is particularly preferably 0.5% by mass, particularly preferably 0.3% by mass in some cases. The content of the unsaturated cyclic carbonate before the initial charge-discharge may be equal to or more than any of the above lower limits and equal to or less than any of the above upper limits. When the content of the unsaturated cyclic carbonate is within the above range, the above effect can be more effectively exhibited.

When the nonaqueous electrolyte solution contains the unsaturated cyclic carbonate, the lower limit of the content A (remaining amount) of the unsaturated cyclic carbonate in the nonaqueous electrolyte solution after the initial charge-discharge is preferably 0.05 mol/dm$^3$, more preferably 0.1 mol/dm$^3$, still more preferably 0.5 mol/dm$^3$, still more preferably 1.0 mol/dm$^3$. The lower limit of the content A of the unsaturated cyclic carbonate is particularly preferably 1.2 mol/dm$^3$, particularly preferably 1.4 mol/dm$^3$ in some cases. On the other hand, the upper limit of the content A of the unsaturated cyclic carbonate is preferably 5.0 mol/dm$^3$, more preferably 4.0 mol/dm$^3$, still more preferably 3.0 mol/dm$^3$, still more preferably 2.0 mol/dm$^3$. Furthermore, from the viewpoint of increasing the input after the charge-discharge cycle, the upper limit of the content A of the unsaturated cyclic carbonate is particularly preferably 1.6 mol/dm$^3$ in some cases. The content A of the unsaturated cyclic carbonate after the initial charge-discharge may be equal to or more than any of the above lower limits and equal to or less than any of the above upper limits. When the content A of the unsaturated cyclic carbonate after the initial charge-discharge is within the above range, the input after the charge-discharge cycle can be further increased.

When the nonaqueous electrolyte solution contains the unsaturated cyclic carbonate, the lower limit of the ratio (C/A) of the molar content C of the chain carboxylic acid ester to the molar content A of the unsaturated cyclic carbonate in the nonaqueous electrolyte solution after the initial charge-discharge is preferably 8.0, more preferably 10.0, still more preferably 12.0. The lower limit of the ratio (C/A) is particularly preferably 15.0, particularly preferably 18.0, particularly preferably 22.0 in some cases. On the other hand, the upper limit of the ratio (C/A) is preferably 50.0, more preferably 40.0, still more preferably 30.0. Furthermore, from the viewpoint of increasing the input after the charge-discharge cycle, the upper limit of the ratio (C/A) is more preferably 27.0 in some cases. The ratio (C/A) after the initial charge-discharge may be equal to or more than any of the above lower limits and equal to or less than any of the above upper limits. When the ratio (C/A) in the nonaqueous electrolyte solution after the initial charge-discharge is within the above range, the input after the charge-discharge cycle can be further increased.

Examples of the fluorinated cyclic carbonate include fluoroethylene carbonate (FEC) and difluoroethylene carbonate (DFEC). Among these, fluoroethylene carbonate is preferable.

When the nonaqueous electrolyte solution contains the fluorinated cyclic carbonate, the lower limit of the content of the fluorinated cyclic carbonate in the nonaqueous electrolyte solution before the initial charge-discharge is preferably 0.1% by mass, more preferably 0.2% by mass, still more preferably 0.3% by mass, still more preferably 0.4% by mass with respect to the total mass of the nonaqueous electrolyte solution. On the other hand, the upper limit of the content of the fluorinated cyclic carbonate is preferably 5.0% by mass, more preferably 3.0% by mass, still more preferably 2.0% by mass, still more preferably 1.0% by mass. The content of the fluorinated cyclic carbonate before the initial charge-discharge may be equal to or more than any of the above lower limits and equal to or less than any of the above upper limits. When the content of the fluorinated cyclic carbonate is within the above range, the above effect can be more effectively exhibited.

When the nonaqueous electrolyte solution contains the fluorinated cyclic carbonate, the lower limit of the content (remaining amount) of the fluorinated cyclic carbonate in the nonaqueous electrolyte solution after the initial charge-discharge is preferably 0.05 mol/dm$^3$, more preferably 0.1 mol/dm$^3$, still more preferably 0.5 mol/dm$^3$, still more preferably 0.7 mol/dm$^3$. On the other hand, the upper limit of the content of the fluorinated cyclic carbonate is preferably 5.0 mol/dm$^3$, more preferably 4.0 mol/dm$^3$, still more preferably 3.0 mol/dm$^3$, still more preferably 2.0 mol/dm$^3$. The content of the fluorinated cyclic carbonate after the initial charge-discharge may be equal to or more than any of the above lower limits and equal to or less than any of the above upper limits. When the content of the fluorinated cyclic carbonate after the initial charge-discharge is within the above range, the input after the charge-discharge cycle can be further increased.

As the oxalate salt containing the phosphorus element or the boron element, a lithium oxalate salt containing the phosphorus element or the boron element can be used. Specific examples of the lithium oxalate salt containing the phosphorus element or the boron element include lithium bis(oxalate)borate (LiBOB), lithium difluorooxalatoborate (LiFOB), and lithium bis(oxalate)difluorophosphate (LiFOP). Among them, lithium bis(oxalate)borate or lithium bis(oxalate)difluorophosphate is preferable, and lithium bis(oxalate)borate is more preferable.

When the nonaqueous electrolyte solution contains the oxalate salt containing the phosphorus element or the boron element, the lower limit of the content of the oxalate salt in the nonaqueous electrolyte solution before the initial charge-discharge is preferably 0.1% by mass, more preferably 0.2% by mass, still more preferably 0.3% by mass, still more preferably 0.4% by mass with respect to the total mass of the nonaqueous electrolyte solution. On the other hand, the upper limit of the content of the oxalate salt is preferably 5.0% by mass, more preferably 3.0% by mass, still more preferably 2.0% by mass, still more preferably 1.0% by mass. The upper limit of the content of the oxalate salt is particularly preferably 0.8% by mass, particularly preferably 0.6% by mass in some cases. The content of the oxalate salt before the initial charge-discharge may be equal to or more than any of the above lower limits and equal to or less than any of the above upper limits. When the content of the oxalate salt containing the phosphorus element or the boron element is within the above range, the above effect can be more effectively exhibited.

When the nonaqueous electrolyte solution contains the oxalate salt containing the phosphorus element or the boron element, the lower limit of the content B (remaining amount) of the oxalate salt containing the phosphorus element or the boron element in the nonaqueous electrolyte solution after the initial charge-discharge is preferably 0.05 mol/dm$^3$, more preferably 0.1 mol/dm$^3$, still more preferably 0.5 mol/dm$^3$, still more preferably 0.7 mol/dm$^3$. The lower limit of the content B of the oxalate salt is particularly preferably 1.0 mol/dm$^3$, particularly preferably 1.3 mol/dm$^3$ in some cases. On the other hand, the upper limit of the content B of the oxalate salt is preferably 5.0 mol/dm$^3$, more preferably 4.0 mol/dm$^3$, still more preferably 3.0 mol/dm$^3$, still more preferably 2.0 mol/dm$^3$. Furthermore, from the viewpoint of increasing the input after the charge-discharge cycle, the upper limit of the content B of the oxalate salt is particularly preferably 1.5 mol/dm$^3$ in some cases. The content B of the oxalate salt after the initial charge-discharge may be equal to or more than any of the above lower limits and equal to or less than any of the above upper limits. When the content B of the oxalate salt after the initial charge-discharge is within the above range, the input after the charge-discharge cycle can be further increased.

When the nonaqueous electrolyte solution contains the oxalate salt containing the phosphorus element or the boron element, the ratio (C/B) of the molar content C of the chain carboxylic acid ester to the molar content B of the oxalate salt in the nonaqueous electrolyte solution after the initial charge-discharge is preferably 8.5, more preferably 10.5, still more preferably 12.5. The lower limit of the ratio (C/B) is still more preferably 15.0, particularly preferably 20.0, particularly preferably 25.0 in some cases. On the other hand, the upper limit of the ratio (C/B) is preferably 55.0, more preferably 45.0, still more preferably 35.0. Furthermore, from the viewpoint of increasing the input after the charge-discharge cycle, the upper limit of the ratio (C/B) is still more preferably 30.0 in some cases. The ratio (C/B) after the initial charge-discharge may be equal to or more than any of the above lower limits and equal to or less than any of the above upper limits. When the ratio (C/B) in the nonaqueous electrolyte after the initial charge-discharge is within the above range, the input after the charge-discharge cycle can be further increased.

As the sulfonate salt containing the fluorine element, a lithium sulfonate salt containing the fluorine element can be used. Specific examples of the lithium sulfonate salt containing the fluorine element include lithium fluorosulfonate (LiSO$_3$F) and lithium trifluoromethanesulfonate (LiSO$_3$CF$_3$). Among them, lithium fluorosulfonate is preferable.

When the nonaqueous electrolyte solution contains the sulfonate salt containing the fluorine element, the lower limit of the content of the sulfonate salt containing the fluorine element in the nonaqueous electrolyte solution before the initial charge-discharge is preferably 0.2% by mass, more preferably 0.4% by mass, still more preferably 0.6% by mass, still more preferably 0.8% by mass with respect to the total mass of the nonaqueous electrolyte solution. On the other hand, the upper limit of the content of the sulfonate salt containing the fluorine element is preferably 8.0% by mass, more preferably 5.0% by mass, still more preferably 2.0% by mass, still more preferably 1.5% by mass. The content of the sulfonate salt containing the fluorine element before the initial charge-discharge may be equal to or more than any of the above lower limits and equal to or less than any of the above upper limits. When the content of the sulfonate salt containing the fluorine element is within the above range, the above effect can be more effectively exhibited.

When the nonaqueous electrolyte solution contains the sulfonate salt containing the fluorine element, the lower limit of the content (remaining amount) of the sulfonate salt containing the fluorine element in the nonaqueous electrolyte solution after the initial charge-discharge is preferably 0.05 mol/dm$^3$, more preferably 0.1 mol/dm$^3$, still more preferably 0.5

mol/dm$^3$, still more preferably 0.7 mol/dm$^3$. On the other hand, the upper limit of the content of the sulfonate salt containing the fluorine element is preferably 5.0 mol/dm$^3$, more preferably 4.0 mol/dm$^3$, still more preferably 3.0 mol/dm$^3$, still more preferably 2.0 mol/dm$^3$. The content of the sulfonate salt containing the fluorine element after the initial charge-discharge may be equal to or more than any of the above lower limits and equal to or less than any of the above upper limits. When the content of the sulfonate salt containing the fluorine element after the initial charge-discharge is within the above range, the input after the charge-discharge cycle can be further increased.

Examples of the phosphate salt containing the fluorine element and the oxygen element include lithium monofluorophosphate and lithium difluorophosphate (LiDFP). Among them, lithium difluorophosphate is preferable.

When the nonaqueous electrolyte solution contains the phosphate salt containing the fluorine element and the oxygen element, the lower limit of the content of the phosphate salt containing the fluorine element and the oxygen element in the nonaqueous electrolyte solution before the initial charge-discharge is preferably 0.2% by mass, more preferably 0.4% by mass, still more preferably 0.6% by mass, still more preferably 0.8% by mass with respect to the total mass of the nonaqueous electrolyte solution. On the other hand, the upper limit of the content of the phosphate salt containing the fluorine element and the oxygen element is preferably 8.0% by mass, more preferably 5.0% by mass, still more preferably 2.0% by mass, still more preferably 1.5% by mass. The content of the phosphate salt containing the fluorine element and the oxygen element before the initial charge-discharge may be equal to or more than any of the above lower limits and equal to or less than any of the above upper limits. When the content of the phosphate salt containing the fluorine element and the oxygen element is within the above range, the above effect can be more effectively exhibited.

When the nonaqueous electrolyte solution contains the phosphate salt containing the fluorine element and the oxygen element, the lower limit of the content (remaining amount) of the phosphate salt containing the fluorine element and the oxygen element in the nonaqueous electrolyte solution after the initial charge-discharge is preferably 0.05 mol/dm$^3$, more preferably 0.1 mol/dm$^3$, still more preferably 0.5 mol/dm$^3$, still more preferably 0.7 mol/dm$^3$. On the other hand, the upper limit of the content of the phosphate salt containing the fluorine element and the oxygen element is preferably 5.0 mol/dm$^3$, more preferably 4.0 mol/dm$^3$, still more preferably 3.0 mol/dm$^3$, still more preferably 2.0 mol/dm$^3$. The content of the phosphate salt containing the fluorine element and the oxygen element after the initial charge-discharge may be equal to or more than any of the above lower limits and equal to or less than any of the above upper limits. When the content of the phosphate salt containing the fluorine element and the oxygen element after the initial charge-discharge is within the above range, the input after the charge-discharge cycle can be further increased.

Examples of the sulfates include a cyclic sulfate and a chain sulfate. Specific examples of the cyclic sulfate include ethylene sulfate, 1,3-propylene sulfate, 2,3-propylene sulfate, 4,5-pentene sulfate, 4,4'-bis(2,2-dioxo-1,3,2-dioxathiolane), and 4-methylsulfonyloxymethyl-2,2-dioxo-1,3,2-dioxathiolane. Specific examples of the chain sulfate include dimethyl sulfate and diethyl sulfate. Among them, a cyclic sulfate is preferable, and 4,4'-bis(2,2-dioxo-1,3,2-dioxathiolane) is more preferable.

When the nonaqueous electrolyte solution contains the sulfate, the lower limit of the content of the sulfate in the nonaqueous electrolyte solution before the initial charge-discharge is preferably 0.1% by mass, more preferably 0.2% by mass, still more preferably 0.3% by mass, still more preferably 0.4% by mass with respect to the total mass of the nonaqueous electrolyte solution. On the other hand, the upper limit of the content of the sulfate is preferably 5.0% by mass, more preferably 3.0% by mass, still more preferably 2.0% by mass, still more preferably 1.0% by mass. The content of the sulfate before the initial charge-discharge may be equal to or more than any of the above lower limits and equal to or less than any of the above upper limits. When the content of the sulfate is within the above range, the above effect can be more effectively exhibited.

When the nonaqueous electrolyte solution contains the sulfate, the lower limit of the content (remaining amount) of the sulfate in the nonaqueous electrolyte solution after the initial charge-discharge is preferably 0.05 mol/dm$^3$, more preferably 0.1 mol/dm$^3$, still more preferably 0.5 mol/dm$^3$, still more preferably 0.7 mol/dm$^3$. On the other hand, the upper limit of the content of the sulfate is preferably 5.0 mol/dm$^3$, more preferably 4.0 mol/dm$^3$, still more preferably 3.0 mol/dm$^3$, still more preferably 2.0 mol/dm$^3$. The content of the sulfate after the initial charge-discharge may be equal to or more than any of the above lower limits and equal to or less than any of the above upper limits. When the content of the phosphate salt containing the sulfate after the initial charge-discharge is within the above range, the input after the charge-discharge cycle can be further increased.

Examples of the sulfonic acid esters include cyclic sulfonic acid esters and chain sulfonic acid esters. Specific examples of the cyclic sulfonic acid ester include 1,3-propane sultone, 1,4-butane sultone, 1,3-propene sultone, 1,4-butene sultone, 1-methyl-1,3-propene sultone, 2-methyl-1,3-propene sultone, and 3-methyl-1,3-propene sultone. Specific examples of the chain sulfonic acid ester include methyl methanesulfonate and ethyl methanesulfonate. Among them, a cyclic sulfonic acid ester is preferable, and 1,3-propene sultone is more preferable.

When the nonaqueous electrolyte solution contains the sulfonic acid ester, the lower limit of the content of the sulfonic acid ester in the nonaqueous electrolyte solution before the initial charge-discharge is preferably 0.1% by mass, more preferably 0.2% by mass, still more preferably 0.3% by mass, still more preferably 0.4% by mass with respect to the total mass of the nonaqueous electrolyte solution. On the other hand, the upper limit of the content of the sulfonic acid ester is preferably 5.0% by mass, more preferably 3.0% by mass, still more preferably 2.0% by mass, still more preferably 1.0% by mass. The content of the sulfonic acid ester before the initial charge-discharge may be equal to or more than any of the above lower limits and equal to or less than any of the above upper limits. When the content of the sulfonic acid ester is within the above range, the above effect can be more effectively exhibited.

When the nonaqueous electrolyte solution contains the sulfonic acid ester, the lower limit of the content (remaining amount) of the sulfonic acid ester in the nonaqueous electrolyte solution after the initial charge-discharge is preferably $0.05 \text{ mol/dm}^3$, more preferably $0.1 \text{ mol/dm}^3$, still more preferably $0.5 \text{ mol/dm}^3$, still more preferably $0.7 \text{ mol/dm}^3$. On the other hand, the upper limit of the content of the sulfonic acid ester is preferably $5.0 \text{ mol/dm}^3$, more preferably $4.0 \text{ mol/dm}^3$, still more preferably $3.0 \text{ mol/dm}^3$, still more preferably $2.0 \text{ mol/dm}^3$. The content of the sulfonic acid ester after the initial charge-discharge may be equal to or more than any of the above lower limits and equal to or less than any of the above upper limits. When the content of the phosphate salt containing the sulfonic acid ester after the initial charge-discharge is within the above range, the input after the charge-discharge cycle can be further increased.

Among the above-described additives, an unsaturated cyclic carbonate and an oxalate salt containing the phosphorus element or the boron element are preferable from the viewpoint of increasing the input. In a preferable aspect, the nonaqueous electrolyte solution contains both the unsaturated cyclic carbonate and the oxalate salt containing the phosphorus element or the boron element. When the nonaqueous electrolyte solution contains both the unsaturated cyclic carbonate and the oxalate salt containing the phosphorus element or the boron element, the content of the oxalate salt containing the phosphorus element or the boron element in the nonaqueous electrolyte solution before the initial charge-discharge is preferably larger than the content of the unsaturated cyclic carbonate. The lower limit of the ratio (mass basis) of the content of the oxalate salt containing the phosphorus element or the boron element to the content of the unsaturated cyclic carbonate in the nonaqueous electrolyte solution before the initial charge-discharge is preferably 1.1, more preferably 1.5, still more preferably 2.0, still more preferably 2.5. The upper limit of the ratio is preferably 15.0, more preferably 10.0, still more preferably 8.0, particularly preferably 6.0. The ratio before the initial charge-discharge may be equal to or more than any of the above lower limits and equal to or less than any of the above upper limits. When the ratio (mass basis) of the content of the oxalate salt containing the phosphorus element or the boron element to the content of the unsaturated cyclic carbonate is within the above range, the above effect can be more effectively exhibited.

From the viewpoint that the chain carboxylic acid ester moderately suppresses the decomposition by reduction of the additive on the surface of the negative electrode, it is preferable to appropriately control the ratio of the molar content C of the chain carboxylic acid ester to the total amount of the molar content A of the unsaturated cyclic carbonate and the molar content B of the oxalate salt containing the phosphorus element or the boron element in the nonaqueous electrolyte solution after the initial charge-discharge, that is, the molar ratio ($C/(A + B)$) of the content of the compound in the nonaqueous electrolyte solution after the initial charge-discharge. More specifically, from the viewpoint of increasing the input retention ratio after the charge-discharge cycle, the lower limit of the molar ratio is preferably 3.0, more preferably 5.0, still more preferably 6.4. In addition, from the viewpoint of increasing the input after the charge-discharge cycle, the lower limit of the molar ratio is more preferably 7.0, still more preferably 8.0, still more preferably 9.7 (such as 12.0) in some cases. The upper limit of the molar ratio is preferably 25.0, more preferably 20.0, still more preferably 18.0, particularly preferably 14.4. In addition, from the viewpoint of increasing the input retention ratio after the charge-discharge cycle, the upper limit of the molar ratio is more preferably 14.0, still more preferably 13.0 in some cases. In some aspects, the upper limit of the molar ratio may be 10.0 or 9.0. In one aspect, from the viewpoint of increasing the input retention ratio after the charge-discharge cycle, the molar ratio may be 3.0 or more and 20.0 or less, 6.4 or more and 14.4 or less, 6.4 or more and 10.0 or less, or 6.4 or more and 8.0 or less. In another aspect, from the viewpoint of increasing the input after the charge-discharge cycle, the molar ratio may be 7.0 or more and 25.0 or less, 8.5 or more and 20.0 or less, or 9.7 or more and 14.4 or less. The molar ratio may be greater than or equal to any of the above lower limits and lower than or equal to any of the above upper limits (the lower limit is to be a smaller value than the value of the upper limit).

The nonaqueous electrolyte solution may contain an additive other than the above-described additives. The other additive may be an additive that is decomposed by reduction on the negative electrode or an additive that is not decomposed by reduction on the negative electrode. Examples of the other additive include: aromatic compounds such as biphenyl, alkylbiphenyls, terphenyl, partly hydrogenated terphenyls, cyclohexylbenzene, t-butylbenzene, t-amylbenzene, diphenyl ether, and dibenzofuran; partial halides of the aromatic compounds, such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; succinic anhydride, glutaric anhydride, maleic anhydride, citraconic anhydride, glutaconic anhydride, itaconic anhydride, and cyclohexanedicarboxylic anhydride; sulfolane, dimethyl sulfone, diethyl sulfone, dimethylsulfoxide, diethylsulfoxide, tetramethylenesulfoxide, diphenyl sulfide, thioanisole, diphenyl disulfide, dipyridinium disulfide, perfluorooctane, tristrimethylsilyl borate, tristrimethylsilyl phosphate, and tetrakistrimethylsilyl titanate. These additives may be used singly, or in mixture of two or more kinds thereof.

The total content of all the additives contained in the nonaqueous electrolyte solution before the initial charge-discharge is preferably 0.01% by mass or more and 10% by mass or less, more preferably 0.1% by mass or more and 8% by mass or less, still more preferably 0.2% by mass or more and 5% by mass or less, particularly preferably 0.3% by mass or more and 3% by mass or less, with respect to the total mass of the nonaqueous electrolyte solution. When the total content of all the additives falls within the above range, it is possible to improve capacity retention performance or charge-discharge cycle performance after high-temperature storage, and to further improve safety.

In an embodiment of the present invention, when the volume of the nonaqueous electrolyte is denoted by Ve [$cm^3$], the void volume of the positive electrode is denoted by Vp [$cm^3$], the void volume of the negative electrode is denoted by Vn [$cm^3$], and the void volume of the separator is denoted by Vs [$cm^3$], Formula 1 above is satisfied. That is, the coefficient $\alpha$ calculated from Formula 2 below is 1.1 or more.

$$\alpha = Ve/(Vp + Vn + Vs) \qquad\qquad 2$$

The lower limit of the coefficient $\alpha$ is 1.1 as described above, and is preferably 1.12, more preferably 1.15, still more preferably 1.20, still more preferably 1.30. When the coefficient $\alpha$ is the above lower limit or more, it is possible to suppress formation of a film derived from other components such as a nonaqueous solvent in the nonaqueous electrolyte on the negative electrode. Accordingly, the initial input of the nonaqueous electrolyte energy storage device can be increased. On the other hand, the upper limit of the coefficient $\alpha$ is not particularly limited, but may be, for example, 2.0 or 2.00 from the viewpoint of the energy density of the nonaqueous electrolyte energy storage device.

Although not particularly limited, the lower limit of the volume Ve of the nonaqueous electrolyte is preferably 25.6 $cm^3$, more preferably 30.2 $cm^3$, still more preferably 34.9 $cm^3$. The upper limit of the volume Ve of the nonaqueous electrolyte is preferably 44.2 $cm^3$, more preferably 39.5 $cm^3$. When the volume Ve of the nonaqueous electrolyte is within the above range, the above effect can be more effectively exhibited.

Although not particularly limited, the lower limit of the void volume Vp of the positive electrode is preferably 5.0 $cm^3$, more preferably 5.8 $cm^3$, still more preferably 6.6 $cm^3$. The upper limit of the volume Vp of the positive electrode is preferably 8.1 $cm^3$, more preferably 7.4 $cm^3$. When the volume Vp of the positive electrode is within the above range, the above effect can be more effectively exhibited.

Although not particularly limited, the lower limit of the void volume Vn of the negative electrode is preferably 7.7 $cm^3$, more preferably 8.8 $cm^3$, still more preferably 10.0 $cm^3$. The upper limit of the volume Vn of the negative electrode is preferably 12.2 $cm^3$, more preferably 11.1 $cm^3$. When the volume Vn of the negative electrode is within the above range, the above effect can be more effectively exhibited.

Although not particularly limited, the lower limit of the void volume Vs of the separator is preferably 6.7 $cm^3$, more preferably 6.9 $cm^3$, still more preferably 7.0 $cm^3$. The upper limit of the volume Vs of the separator is preferably 7.6 $cm^3$, more preferably 7.4 $cm^3$. When the volume Vs of the separator is within the above range, the above effect can be more effectively exhibited.

The shape of the nonaqueous electrolyte energy storage device according to the present embodiment is not particularly limited, and examples thereof include cylindrical batteries, prismatic batteries, flat batteries, coin batteries, and button batteries.

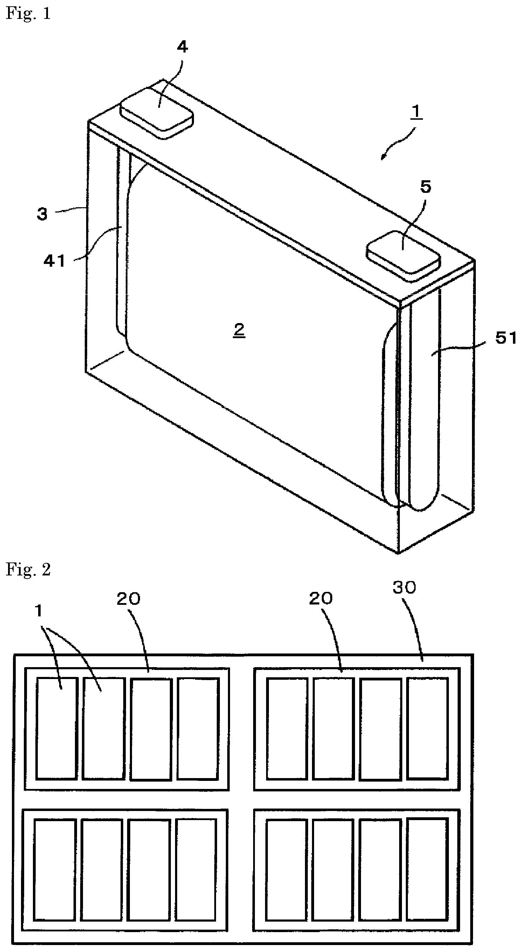

Fig. 1 shows a nonaqueous electrolyte energy storage device 1 as an example of a prismatic battery. It is to be noted that Fig. 1 is a view illustrating the inside seen through a case. An electrode assembly 2 including a positive electrode and a negative electrode wound with a separator interposed therebetween is housed in a prismatic case 3. The positive electrode is electrically connected to a positive electrode terminal 4 via a positive electrode lead 41. The negative electrode is electrically connected to a negative electrode terminal 5 via a negative electrode lead 51.

[Energy storage apparatus]

The nonaqueous electrolyte energy storage device according to the present embodiment can be mounted, as an energy storage unit (battery module) configured by assembling a plurality of nonaqueous electrolyte energy storage devices, on a power source for automobiles such as electric vehicles (EVs), hybrid vehicles (HEVs), and plug-in hybrid vehicles (PHEVs), a power source for electronic devices such as personal computers and communication terminals, or a power source for power storage, or the like. In this case, the technique of the present invention may be applied to at least one nonaqueous electrolyte energy storage device included in the energy storage unit.

Fig. 2 illustrates an example of an energy storage apparatus 30 formed by assembling energy storage units 20 in each of which two or more electrically connected nonaqueous electrolyte energy storage devices 1 are assembled. The energy storage apparatus 30 may include a busbar (not illustrated) for electrically connecting two or more nonaqueous electrolyte energy storage devices 1 and a busbar (not illustrated) for electrically connecting two or more energy storage units 20. The energy storage unit 20 or the energy storage apparatus 30 may include a state monitor (not illustrated) that monitors the state of one or more nonaqueous electrolyte energy storage devices.

[Method for producing nonaqueous electrolyte energy storage device]

A method for producing the nonaqueous electrolyte energy storage device of the present embodiment can be appropriately selected from known methods. The producing method includes, for example, preparing an electrode assembly, preparing a nonaqueous electrolyte, and housing the electrode assembly and the nonaqueous electrolyte in a case. The preparing an electrode assembly includes: preparing a positive electrode and a negative electrode, and forming an electrode assembly by stacking or winding the positive electrode and the negative electrode with a separator interposed therebetween.

Housing the nonaqueous electrolyte in a case can be appropriately selected from known methods. For example, when a nonaqueous electrolyte solution is used for the nonaqueous electrolyte, the nonaqueous electrolyte solution may be injected from an inlet formed in the case, and the inlet may be then sealed.

[Other embodiments]

The nonaqueous electrolyte energy storage device according to the present invention is not limited to the embodiments described above, and various changes may be made without departing from the gist of the present invention. For example, to the configuration of an embodiment, the configuration of another embodiment can be added, or a part of the configuration of an embodiment can be replaced with the configuration of another embodiment or a well-known technique. Further, a part of the configuration of an embodiment can be deleted. In addition, a well-known technique can be added to the configuration of an embodiment.

While the case where the nonaqueous electrolyte energy storage device is used as a chargeable and dischargeable nonaqueous electrolyte secondary battery (for example, lithium ion secondary battery) has been described in the embodiments, the kind, shape, dimensions, capacity, and the like of the nonaqueous electrolyte energy storage device are not particularly limited. The present invention can also be applied to various secondary batteries and capacitors such as electric double-layer capacitors and lithium ion capacitors.

EXAMPLES

Hereinafter, the present invention will be described more specifically with reference to examples. The present invention is not limited to the following examples.

<Test Example 1: Relationship between amount of nonaqueous electrolyte and input>

In order to evaluate the relationship between the amount of the nonaqueous electrolyte and the input in the nonaqueous electrolyte energy storage device, first, a nonaqueous electrolyte energy storage device (hereinafter also referred to as an "energy storage device with MP") including a nonaqueous electrolyte containing methyl propionate (MP) and a nonaqueous electrolyte energy storage device (hereinafter also referred to as "energy storage device without MP") including a nonaqueous electrolyte not containing MP were prepared by the following procedure. Thereafter, the initial input was evaluated for each of the "energy storage devices with MP" having different amounts of the nonaqueous electrolyte and the "energy storage devices without MP" having different amounts of the nonaqueous electrolyte using the coefficient $\alpha$ calculated from Formula 2 as an index.

[Preparation of nonaqueous electrolyte energy storage device]

(Preparation of positive electrode)

As a positive active material, $LiNi_{1/3}Mn_{1/3}Co_{1/3}O_2$ was prepared. Next, a positive composite paste containing the positive active material, acetylene black (AB) as a conductive agent, and polyvinylidene fluoride (PVDF) as a binder at a mass ratio of 90 : 5 : 5 in terms of solids, was prepared using N-methylpyrrolidone (NMP) as a dispersion medium. The positive composite paste was directly applied to both surfaces of an aluminum foil as a positive electrode substrate, dried, and then pressed. Thus, a positive electrode was obtained in which a positive active material layer was stacked on both surfaces of the positive electrode substrate.

(Preparation of negative electrode)

Graphite (Gr) as a negative active material, a styrene-butadiene rubber (SBR) as a binder, carboxymethyl cellulose (CMC) as a thickener, and water as a dispersion medium were mixed together to prepare a negative composite paste. The mass ratio of Gr, SBR, and CMC was set to be 96 : 2 : 2 (in terms of solids). The negative composite paste was applied to both surfaces of a copper foil as a negative electrode substrate, dried, and then pressed. Thus, a negative electrode was obtained in which a negative active material layer was stacked on both surfaces of the negative electrode substrate.

(Preparation of nonaqueous electrolyte)

As for the "energy storage device with MP", $LiPF_6$ was dissolved as an electrolyte salt in a content of 1.2 mol/dm³ in a nonaqueous solvent in which EC, DMC, EMC, and MP were mixed at a volume ratio of 30 : 35 : 32 : 3 (% by volume). In addition, vinylene carbonate (VC) as an additive was dissolved in a content of 0.2% by mass, and lithium bis(oxalate) borate (LiBOB) was dissolved in a content of 0.5% by mass in this solution. The reduction potential of VC was 0.6 V vs. Li/Li⁺, and the reduction potential of LiBOB was 1.6 V vs. Li/Li⁺.

As for the "energy storage device without MP", $LiPF_6$ was dissolved as an electrolyte salt in a content of 1.2 mol/dm³ in a nonaqueous solvent in which EC, DMC, and EMC were mixed at a volume ratio of 30 : 35 : 35 (% by volume). Similarly to the "energy storage device with MP", the additive was dissolved in this solution.

(Production of nonaqueous electrolyte energy storage device)

The positive electrode and the negative electrode were stacked with a polyolefin-made microporous film separator interposed therebetween to prepare an electrode assembly. The electrode assembly was housed in a case made of a metal-resin composite film, and the nonaqueous electrolyte was injected into the case such that the coefficient $\alpha$ calculated from Formula 2 described above was a target value, and then the case was sealed by thermal welding to provide each of the "energy storage devices with MP" and the "energy storage devices without MP".

[Measurement and evaluation]

(Initial charge-discharge)

The obtained "energy storage devices with MP" and "energy storage devices without MP" were subjected to initial charge-discharge under the following conditions.

In a thermostatic chamber at 25°C, the energy storage devices were subjected to constant current charge at a charge current of 1.0 C and an end-of-charge voltage of 4.10 V, and then to constant voltage charge at 4.10 V. A charge termination condition was a total charge time of 3 hours. Thereafter, a pause of 10 minutes was provided. The energy storage devices were subjected to constant current discharge at a discharge current of 1.0 C and an end-of-discharge voltage of 3.0 V. The discharge capacity at this time was defined as an initial discharge capacity.

(Measurement of initial input)

After the initial charge-discharge, the initial inputs of the "energy storage devices with MP" and "energy storage devices without MP" were measured in the following manner.

The respective energy storage devices were subjected to constant current charge at a charge current of 1.0 C in a thermostatic chamber at 25°C to adjust the SOC to 50%, stored in a thermostatic chamber at -30°C for 4 hours, and then charged at a constant voltage of 4.0 V, 4.1 V, 4.2 V, or 4.3 V for 10 seconds. The "SOC" (State of Charge) refers to a state of charge of a nonaqueous electrolyte energy storage device based on a rated capacity measured in a voltage range in which the nonaqueous electrolyte energy storage device is usually used. In this example, the rated capacity was the initial discharge capacity. After completion of each discharge, constant current discharge was performed at a current of 0.2 C to set the SOC to 50%. The resistance value was calculated from the slope of the voltage in each charge and the current 1 second after the start of charge, and "{difference between voltage before charge and upper limit voltage (4.3 V)}/resistance value × upper limit voltage (4.3 V)" was determined, and used as an "initial input". The ratio of each initial input to the initial input when the coefficient $\alpha$ was 1.55 was obtained and defined as an "initial input ratio". As the relationship between the amount of the nonaqueous electrolyte and the initial input of the nonaqueous electrolyte energy storage device, the relationship between the coefficient $\alpha$ and the initial input ratio is shown in Table 1.

[Table 1]

| | Chain carboxylic acid ester | | Coefficient α | Initial input ratio |
|---|---|---|---|---|
| | Type | Content [% by volume] | | |
| Energy storage device with MP | MP | 3 | 1.55 | 1.00 |
| | MP | 3 | 1.48 | 0.99 |
| | MP | 3 | 1.40 | 1.00 |
| | MP | 3 | 1.29 | 0.98 |
| | MP | 3 | 1.24 | 0.98 |
| | MP | 3 | 1.09 | 0.98 |
| | MP | 3 | 0.98 | 0.89 |
| | MP | 3 | 0.88 | 0.76 |
| Energy storage device without MP | - | - | 1.55 | 1.00 |
| | - | - | 1.48 | 1.00 |
| | - | - | 1.39 | 1.00 |
| | - | - | 1.33 | 0.99 |
| | - | - | 1.26 | 0.99 |
| | - | - | 1.08 | 0.99 |
| | - | - | 0.98 | 1.01 |

(Evaluation)

As shown in Table 1, the "energy storage device without MP" maintains the initial input ratio around 1.00 also when the value of the coefficient α changes. On the other hand, the "energy storage device with MP" maintains the initial input ratio around 1.00 when the coefficient α is 1.1 or more, but the initial input ratio decreases when the coefficient α is smaller than 1.1. From this, it is presumed that the effect of suppressing the decomposition by reduction of the additive by methyl propionate (MP) was excessively exhibited when the amount of the nonaqueous electrolyte was small, and as a result, the resistance of the film on the surface of the negative electrode was increased.

<Test Example 2: Relationship between content of MP and input>

In order to evaluate the relationship between the content of methyl propionate (MP) and the input in the nonaqueous electrolyte energy storage device, first, a nonaqueous electrolyte energy storage device was prepared in the following procedure. Thereafter, inputs were evaluated for nonaqueous electrolyte energy storage devices having different MP contents.

[Preparation of nonaqueous electrolyte energy storage device]

Nonaqueous electrolyte energy storage devices of Examples 1 to 4 were produced in the same procedure as in the "energy storage device with MP" described above except that the content of methyl propionate (MP) in the nonaqueous solvent before initial charge-discharge was changed as shown in Table 2, and the nonaqueous electrolyte was injected into the case such that the coefficient α was 1.55. The content of EMC in the nonaqueous solvent of each example was adjusted so that the total content of EMC and MP was 35% by volume.

[Measurement and evaluation]

The respective nonaqueous electrolyte energy storage devices were subjected to initial charge-discharge under the same conditions as for the above initial charge-discharge. The contents (hereinafter also referred to as remaining amounts) of MP, VC, and LiBOB in the nonaqueous electrolyte after the initial charge-discharge are shown in Table 2. The molar ratio (C/(A + B)) of the remaining amount (C) of MP to the total remaining amount of the remaining amount (A) of VC and the remaining amount (B) of LiBOB is shown in Table 2.

After the initial charge-discharge, the initial input was measured for each nonaqueous electrolyte energy storage device in the same procedure as the above measurement of the initial input. The obtained initial inputs are shown in Table 2.

(Charge-discharge cycle test)

After measurement of the initial input, a charge-discharge cycle test was performed at 55°C in the following manner. Constant current charge was performed at a charge current of 10 C and an end-of-charge voltage of 3.9 V. Thereafter, constant current discharge was performed at a discharge current of 10 C and an end-of-discharge voltage of 3.6 V. The charge and the discharge were each followed by a pause of 10 minutes. This charge-discharge was repeated for 1000 hours.

The input after the charge-discharge cycle was measured in the same procedure as in the measurement of the initial input. Furthermore, the percentage of the input after the charge-discharge cycle with respect to the initial input was calculated as the input retention ratio [%]. The obtained input and input retention ratio are shown in Table 2.

[Table 2]

| | | Chain carboxylic acid ester | | | Additive | | Molar ratio (C/(A + B)) | Evaluation | | |
| | | | | | VC | LiBOB | | Initial input [W] | After charge-discharge cycle | |
| | Type | Content [% by volume] | Remaining amount C [mol/dm$^3$] | Remaining amount A [mol/dm$^3$] | Remaining amount B [mol/dm$^3$] | | | Input [W] | Input retention ratio [%] |
| Example 1 | MP | 0 | 0.0 | 1.1 | 0.8 | 0.0 | 167 | 163 | 97.6 |
| Example 2 | MP | 3 | 17.2 | 1.4 | 1.3 | 6.4 | 184 | 187 | 101.6 |
| Example 3 | MP | 5 | 28.0 | 1.5 | 1.4 | 9.7 | 194 | 196 | 101.0 |
| Example 4 | MP | 7 | 40.2 | 1.5 | 1.3 | 14.4 | 195 | 195 | 100.0 |

As shown in Table 2, the nonaqueous electrolyte energy storage devices in which the MP content in the nonaqueous solvent before the initial charge-discharge was 3% by volume (Example 2), 5% by volume (Example 3), or 7% by volume (Example 4) all had larger initial inputs than the nonaqueous electrolyte energy storage device in which the MP content was 0% by volume (Example 1). In the nonaqueous electrolyte energy storage device of Example 3, the MP content in the nonaqueous solvent before initial charge-discharge was 5% by volume, and the molar ratio (C/(A + B)) was 9.7. The nonaqueous electrolyte energy storage device of Example 3 had the largest input after the charge-discharge cycle. Therefore, the molar ratio (C/(A + B)) is preferably 9.7 or more from the viewpoint of increasing the input after the charge-discharge cycle. In the nonaqueous electrolyte energy storage device of Example 2, the MP content in the nonaqueous solvent before initial charge-discharge was 3% by volume, and the molar ratio (C/(A + B)) was 6.4. The nonaqueous electrolyte energy storage device of Example 2 had the largest input retention ratio after the charge-discharge cycle. Therefore, from the viewpoint of increasing the input retention ratio after the charge-discharge cycle, the molar ratio (C/(A + B)) is preferably 6.4 or more.

INDUSTRIAL APPLICABILITY

The present invention can be applied to nonaqueous electrolyte energy storage devices and the like for use as power sources for electronic devices such as personal computers and communication terminals, and automobiles and the like.

DESCRIPTION OF REFERENCE SIGNS

1: Nonaqueous electrolyte energy storage device
2: Electrode assembly
3: Case
4: Positive electrode terminal
41: Positive electrode lead
5: Negative electrode terminal
51: Negative electrode lead
20: Energy storage unit
30: Energy storage apparatus

**Claims**

1. A nonaqueous electrolyte energy storage device comprising: a positive electrode; a negative electrode; a separator; and a nonaqueous electrolyte,

   wherein the nonaqueous electrolyte contains: a nonaqueous solvent containing a chain carboxylic acid ester; and an additive configured to be decomposed by reduction on a surface of the negative electrode, and
   Formula 1 below is satisfied where a volume of the nonaqueous electrolyte is denoted by Ve, a void volume of the positive electrode is denoted by Vp, a void volume of the negative electrode is denoted by Vn, and a void volume of the separator is denoted by Vs.

$$(Vp + Vn + Vs) \times 1.1 \le Ve \qquad\qquad 1$$

2. The nonaqueous electrolyte energy storage device according to claim 1, wherein a reduction potential of the additive is 0.5 V (vs. Li/Li$^+$) or more.

3. The nonaqueous electrolyte energy storage device according to claim 1 or 2, wherein the additive is at least one selected from the group consisting of an unsaturated cyclic carbonate, a fluorinated cyclic carbonate, an oxalate salt containing the phosphorus element or the boron element, a sulfonate salt containing the fluorine element, a phosphate salt containing the fluorine element and the oxygen element, a sulfate, and a sulfonic acid ester.

4. The nonaqueous electrolyte energy storage device according to claim 1 or 2, wherein the additive is at least one of an unsaturated cyclic carbonate and an oxalate salt containing the phosphorus element or the boron element.

5. The nonaqueous electrolyte energy storage device according to claim 4, wherein a ratio (C/(A + B)) of a content C of the chain carboxylic acid ester to a total amount of a content A of the unsaturated cyclic carbonate and a content B of the oxalate salt containing the phosphorus element or the boron element in the nonaqueous electrolyte is 6.4 or more and 14.4 or less on a molar basis.

6. The nonaqueous electrolyte energy storage device according to claim 4, wherein a ratio (C/(A + B)) of a content C of the chain carboxylic acid ester to a total amount of a content A of the unsaturated cyclic carbonate and a content B of the oxalate salt containing the phosphorus element or the boron element in the nonaqueous electrolyte is 9.7 or more on a molar basis.

Fig. 1

Fig. 2

## INTERNATIONAL SEARCH REPORT

| International application No. |
|---|
| **PCT/JP2023/045854** |

### A. CLASSIFICATION OF SUBJECT MATTER

*H01M 10/0569*(2010.01)i; *H01G 11/06*(2013.01)i; *H01G 11/26*(2013.01)i; *H01G 11/52*(2013.01)i; *H01G 11/60*(2013.01)i; *H01G 11/64*(2013.01)i; *H01M 10/052*(2010.01)i; *H01M 10/0567*(2010.01)i

FI: H01M10/0569; H01M10/0567; H01G11/06; H01G11/60; H01G11/64; H01G11/26; H01G11/52; H01M10/052

According to International Patent Classification (IPC) or to both national classification and IPC

### B. FIELDS SEARCHED

Minimum documentation searched (classification system followed by classification symbols)

H01M10/0569; H01G11/06; H01G11/26; H01G11/52; H01G11/60; H01G11/64; H01M10/052; H01M10/0567

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | US 2022/0252498 A1 (NINGDE AMPEREX TECHNOLOGY LIMITED) 11 August 2022 (2022-08-11)<br>claims, examples | 1 |
| Y | JP 2008-135273 A (SONY CORPORATION) 12 June 2008 (2008-06-12)<br>claims, paragraphs [0017], [0023], [0042], examples | 1-6 |
| Y | WO 2021/166663 A1 (KABUSHIKI KAISHA TOYOTA JIDOSHOKKI) 26 August 2021 (2021-08-26)<br>claims, paragraphs [0028], [0035], [0041]-[0050], examples | 1-6 |
| Y | JP 2014-199775 A (GS YUASA INTERNATIONAL LTD.) 23 October 2014 (2014-10-23)<br>claims, paragraphs [0062]-[0067], examples | 1-6 |
| Y | JP 2015-069810 A (AUTOMOTIVE ENERGY SUPPLY CORP.) 13 April 2015 (2015-04-13)<br>claims, paragraph [0025], examples | 1-6 |

☑ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **14 March 2024** | **26 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**EP 4 632 864 A1**

**INTERNATIONAL SEARCH REPORT**

| International application No. |
|---|
| **PCT/JP2023/045854** |

**C. DOCUMENTS CONSIDERED TO BE RELEVANT**

| Category* | Citation of document, with indication, where appropriate, of the relevant passages | Relevant to claim No. |
|---|---|---|
| Y | WO 2021/060414 A1 (SEKISUI CHEMICAL CO., LTD.) 01 April 2021 (2021-04-01) claims, paragraph [0016], examples | 1-6 |

## INTERNATIONAL SEARCH REPORT
### Information on patent family members

International application No.

**PCT/JP2023/045854**

| Patent document cited in search report | | | Publication date (day/month/year) | Patent family member(s) | | | Publication date (day/month/year) |
|---|---|---|---|---|---|---|---|
| US | 2022/0252498 | A1 | 11 August 2022 | WO | 2022/165754 | A1 | |
| | | | | claims, examples | | | |
| | | | | EP | 4207481 | A1 | |
| | | | | CN | 113366688 | A | |
| JP | 2008-135273 | A | 12 June 2008 | (Family: none) | | | |
| WO | 2021/166663 | A1 | 26 August 2021 | US | 2023/0097126 | A1 | |
| | | | | claims, paragraphs [0046], [0054], [0065]-[0078], examples | | | |
| | | | | CN | 115136377 | A | |
| JP | 2014-199775 | A | 23 October 2014 | US | 2014/0295245 | A1 | |
| | | | | claims, paragraphs [0087]-[0093], examples | | | |
| | | | | EP | 2784866 | A1 | |
| | | | | CN | 104078701 | A | |
| | | | | KR | 10-2014-0118818 | A | |
| JP | 2015-069810 | A | 13 April 2015 | US | 2016/0218398 | A1 | |
| | | | | claims, paragraph [0029], examples | | | |
| | | | | EP | 3051621 | A1 | |
| | | | | CN | 105580194 | A | |
| | | | | KR | 10-2016-0048982 | A | |
| WO | 2021/060414 | A1 | 01 April 2021 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004319212 A